(19) Europäisches Patentamt / European Patent Office / Office européen des brevets

(11) **EP 2 042 121 A1**

(12) **EUROPÄISCHE PATENTANMELDUNG**

(43) Veröffentlichungstag:
**01.04.2009 Patentblatt 2009/14**

(51) Int Cl.:
***A61C 1/07*** *(2006.01)*

(21) Anmeldenummer: 08163128.5

(22) Anmeldetag: **28.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **29.08.2007 DE 102007041014**

(71) Anmelder: **Sirona Dental Systems GmbH**
**64625 Bensheim (DE)**

(72) Erfinder: **Rein, Matthias**
**64653 Lorsch (DE)**

(74) Vertreter: **Sommer, Peter**
**Augustaanlage 32**
**D-68165 Mannheim (DE)**

(54) **Antrieb für ein dentales Handstück und Verfahren zum Beaufschlagen eines Antriebes mit Schwingungen**

(57) Die Erfindung betrifft einen Antrieb 2 für ein dentales Handstück 1 mit einer Antriebswelle 2.1 und einem die Antriebswelle 2.1 aufnehmenden Antriebsgehäuse 2.2, wobei die Antriebswelle 2.1 über Lager 2.3, 2.3' im Antriebsgehäuse 2.2 gelagert ist. Dabei ist ein Schwingungsaktor 4 vorgesehen, durch den zumindest die Antriebswelle 2.1 und/oder das Lager 2.3 mit mechanischen Schwingungen beaufschlagbar ist.

Fig. 1

EP 2 042 121 A1

**Beschreibung**

Technisches Gebiet

Die Erfindung betrifft einen Antrieb für ein dentales Handstück mit einer Antriebswelle und einem die Antriebswelle aufnehmenden Antriebsgehäuse, wobei die Antriebswelle über Lager im Antriebsgehäuse gelagert ist.

Die Erfindung betrifft des Weiteren ein dentales Handstück mit einem Gehäuse und mit einem im Gehäuse angeordneten Antrieb.

Die Erfindung betrifft weiterhin ein Verfahren zum Beaufschlagen eines eine über Lager gelagerte Antriebswelle aufweisenden Antriebes für ein dentales Handstück mit einer mechanischen Schwingung.

Stand der Technik

Aus der DE 196 13 681 A1 sind ein Motor für ein dentales Handstück sowie ein dentales Handstück bekannt.

Die Aufgabe der Erfindung besteht darin, einen Antrieb bzw. ein dentales Handstück derart auszubilden und anzuordnen, dass eine Verbesserung der Betriebseigenschaften gewährleistet ist.

Weiterhin besteht die Aufgabe der Erfindung darin, ein Verfahren zum Betrieb eines Antriebs bzw. eines dentalen Handstücks derart auszubilden, dass ein verbesserter Betrieb gewährleistet ist.

Darstellung der Erfindung

Gemäß der Erfindung weist der Antrieb einen Schwingungsaktor auf, durch den zumindest die Antriebswelle und/oder das Lager mit mechanischen Schwingungen beaufschlagbar ist. Hierdurch werden die in den Lagern der Antriebswelle generierten Reibleistungen reduziert, was zu einer Erhöhung der Standzeit der Lager bzw. des Antriebes und damit zu einer Erhöhung der Bohrleistung führt. Als Antriebswelle sind dabei sowohl die Bohrwelle als auch eventuell vorzusehende Getriebeglieder wie die Motorwelle anzusehen.

Der Schwingungseintrag erfolgt vorzugsweise in den jeweils stehenden, gehäuseseitigen Teil des Lagers, also in die Gleitlagerbuchse oder den äußeren Lagerring. Ein Schwingungseintrag direkt in die Welle ist auch möglich; entweder durch Einsatz eines weiteren Gleitlagers zwischen der Welle und dem Schwingungsaktor oder durch Einsatz eines mitdrehenden Schwingungsaktors.

Sobald die Geschwindigkeit $V_R$ aus der überlagerten Schwingung größer ist als die Bewegung, d. h. die Geschwindigkeit $V_B$ des Bohrers bzw. der Antriebswelle, ist eine Reduzierung der Antriebsleistung gewährleistet.

Zudem wird aufgrund des Schwingungseintrages in die Antriebswelle bzw. den Bohrer, insbesondere bei in axialer Richtung wirkendem Schwingungseintrag, die Abtragleistung des im Handstück eingespannten Bohrers verbessert. Ein in radialer Richtung wirkender Schwingungseintrag erhöht auch die Abtragleistung.

Vorteilhaft kann es sein, dass der Schwingungsaktor als Piezoelement ausgebildet ist. Der Einsatz eines Piezoelements stellt die günstigere Bauteilvariante dar und gewährleistet eine ausreichende Genauigkeit für die Generierung der Schwingung bzw. eines Schwingungsmusters.

Zudem kann es von Vorteil sein, dass der Schwingungsaktor ein- oder mehrteilig ausgebildet ist oder mehrere Schwingungsaktoren vorgesehen sind. Je nach Anwendungsfall kann es vorteilhaft sein, die Schwingung des Antriebs nicht nur an einem, sondern an mehreren Punkten, insbesondere zirkumferenziell um das Lager herum einzukoppeln.

Daneben kann es vorteilhaft sein, dass der Schwingungsaktor mit der Antriebswelle und/oder mit dem Lager mechanisch gekoppelt bzw. kraft- und/oder formschlüssig verbunden ist. Dadurch ist eine notwendige Schwingungsübertragung zwischen Aktor und Antriebswelle und/oder Lager gewährleistet.

In diesem Zusammenhang kann es von Vorteil sein, dass der Schwingungsaktor zumindest teilkreisförmig ausgebildet ist und mit Bezug zur Antriebswelle in Umfangsrichtung am Lager angeordnet ist. Der Schwingungsaktor kann zumindest teilweise in die das Lager aufnehmende Oberfläche des Antriebsgehäuses eingebettet sein, so dass der Schwingungsaktor ein Gegenlager aufweist. Der Schwingungsaktor umgibt das Lager somit mantel- bzw. deckelförmig, so dass eine bestmögliche Einkopplung der Schwingung bzw. des Schwingungsmusters gewährleistet ist.

Ferner kann es von Vorteil sein, dass der Schwingungsaktor mit Bezug zur Antriebswelle in axialer Richtung mechanisch an die Antriebswelle und/oder das Lager gekoppelt ist. Der Schwingungsaktor kann zwecks Bildung eines Gegenlagers zumindest teilweise in die das Lager aufnehmende Oberfläche des Antriebsgehäuses eingebettet sein. Somit ist eine bestmögliche Einkopplung der Schwingung bzw. des Schwingungsmusters in die Antriebswelle bzw. das Werkzeug gewährleistet.

Zudem kann es von Vorteil sein, dass eine Wellenschulter am Lager vorgesehen ist, über die die Schwingung von dem Schwingungsaktor auf die Antriebswelle und/oder auf ein Werkzeug übertragbar ist. Neben einer Reduzierung der Lagerreibung aufgrund der Relativbewegung zwischen dem Lager und der Antriebswelle wird zusätzlich eine Relativbewegung des Bohrers zum Zahn generiert, womit die Bohrleistung erhöht wird. Die Frequenz bzw. Schwingungsgeschwindigkeit ist dabei unabhängig von der Lagergeschwindigkeit der Antriebswelle. Es kommt lediglich auf die ergänzende Relativbewegung zwischen dem Bohrer und dem Zahn an.

Ebenso kann es von Vorteil sein, dass eine Steuereinheit vorgesehen ist, die den Schwingungsaktor

mit einem Schwingungssignal angesteuert. Über die Steuereinheit wird die gewünschte Schwingung der Frequenz und/oder der Amplitude nach geregelt. Die Regelung kann in Abhängigkeit der Drehzahl oder Größe bzw. Durchmessers des verwendeten Lagers oder Bohrers erfolgen. Daneben ist eine Regelung der Dauer der Anregung möglich.

Um eine Reibungsreduktion herbeizuführen, muss die Geschwindigkeit $V_R$ aus der überlagerten Schwingung größer sein als die Bewegung, also die Geschwindigkeit $V_B$ des Bohrers bzw. der Welle selbst.

Dreht sich ein Bohrer beispielsweise mit 36.000 U/min (entspricht 600 U/sec), legt der Bohrer an seiner äußeren Randfläche mit einem Radius r pro Umdrehung einen Weg von 2πr zurück. Bei einem Bohrerdurchmesser von r = 1 mm beträgt der Weg 6,3 mm. Dies entspricht einer Bohrergeschwindigkeit $V_B$ von $V_B$ = 6,3 mm * 600 1/s * 0,001 m/mm = 3,78 m/s.

Ein in Resonanz betriebenes Piezo-Schwingsystem bildet als Schwingungsform einen Sinus aus. Dadurch ergibt sich eine Schwingungsgeschwindigkeit von $V_R = 2\pi f_R a$, wobei $f_R$ die Resonanzfrequenz der Schwingung und a die Größe der Amplitude bezeichnet. Piezo-Resonanzsysteme bilden Amplituden im Mikrometerbereich aus. Geht man von einer Amplitude mit einer Größe von a = 1μm aus, muss die Resonanzfrequenz $f_R$ in diesem Fall mindestens 1.000 kHz bzw. 1 MHz betragen, damit die Schwingungsgeschwindigkeit $V_R$ größer ist als die Bohrergeschwindigkeit $V_B$.

Damit die Reibung auch bei höheren Drehzahlen reduziert werden kann, muss die Resonanzfrequenz $f_R$ entsprechend erhöht werden.

Dies gilt analog auch für eine Reibreduzierung in einem Lager der Bohrerwelle. Aufgrund des im Vergleich zum Bohrer größeren Durchmessers des Lagers muss die Resonanzfrequenz entsprechend erhöht werden. Bei einem Lagerdurchmesser von 5 mm und einer Drehzahl von 36.000 U/min entspricht dies einer Frequenz von 5.000 kHz bzw. 5 MHz.

Ein Schwingungseintrag in axialer Richtung des Bohrers gewährleistet eine weitere Erhöhung der Bohrleistung. Hierdurch wird eine überlagerte, normal zur Zahnoberfläche verlaufende Relativbewegung des Bohrers generiert. Diese Bewegung des Bohrers ist vergleichbar mit dem Schlagbohrverfahren, wie es bei Stein-Bohrwerkzeugen bekannt ist.

Bei dem erfindungsgemäßen Verfahren zum Beaufschlagen eines eine über Lager gelagerte Antriebswelle aufweisenden Antriebes für ein dentales Handstück mit einer mechanischen Schwingung wird die Schwingung mittels eines zusätzlichen Schwingungsaktors generiert und auf die Antriebswelle und/oder das Lager der Antriebswelle übertragen, wobei der Schwingungsaktors über eine Steuereinheit angesteuert wird. Hierdurch werden die in den Lagern der Antriebswelle generierten Reibleistungen reduziert, was zu einer Erhöhung der Standzeit der Lager bzw. des Antriebes führt. Zudem wird aufgrund erhöhter Schwingung der Antriebswelle die Abtragleistung des im Handstück eingespannten Werkzeugs wie beispielsweise eines Bohrers verbessert.

Vorteilhafterweise können Schwingungen mit einer Frequenz $f_R$ von mindestens $f_R = V_B/2\pi a$ mittels des Schwingungsaktors generiert und eingekoppelt werden, wobei $V_B$ gleich die Lagergeschwindigkeit des Bohrers und a gleich die Größe der Schwingungsamplitude ist. Ab diesem Frequenzbereich ist die eingekoppelte Schwingungsgeschwindigkeit größer als die lagerseitige Bohrer- bzw. Lagergeschwindigkeit, so dass der gewünschte Effekt betreffend die reduzierte Lagerreibung eintritt. Innerhalb dieses Frequenzbereichs werden die vorstehend genannten Vorteile erreicht.

Hierbei kann zwecks Minimierung der Lager-Reibleistung das Lager in axialer und/oder radialer Richtung mit Schwingungen beaufschlagt werden. Die zusätzlich durch die Schwingung in axialer Richtung verlaufende Relativbewegung zwischen dem Lager und der Antriebswelle reduziert die Lagerreibung zwischen dem Lager und der Antriebswelle in Umfangsrichtung und gewährleistet eine erhöhte Bohrleistung am Zahn. Dabei ist zu beachten, dass die Schwingungsgeschwindigkeit im Fall der axialen Einkopplung nicht größer sein muss als die Lagergeschwindigkeit, da die sich ergebenden Geschwindigkeitsvektoren rechtwinklig zueinander angeordnet sind.

Daneben kann zwecks Steigerung der Bohrleistung die Antriebswelle in radialer und insbesondere in axialer Richtung mit Schwingungen beaufschlagt werden. Ein axialer Schwingungseintrag in den Bohrer gewährleistet eine weitere Erhöhung der Bohrleistung. Hierdurch wird eine überlagerte, normal zur Zahnoberfläche verlaufende Relativbewegung des Bohrers zum Zahn generiert. Diese Bewegung des Bohrers ist vergleichbar mit dem Schlagbohrverfahren wie es bei Stein-Bohrwerkzeugen bekannt ist. Die Schwingungsgeschwindigkeit muss für diesen Zweck nicht größer sein als die Lagergeschwindigkeit, da es lediglich auf die zusätzliche Relativbewegung zwischen dem Bohrer und dem Zahn ankommt.

Kurze Beschreibung der Zeichnungen

In den Zeichnungen sind Ausführungsbeispiele der Erfindung dargestellt. Es zeigt die:

Fig. 1    eine Prinzipskizze eines Handstücks mit Antrieb und Schwingungsaktor lagerseitig;

Fig. 2    eine Prinzipskizze nach Fig. 1 mit stirnseitigem Schwingungsaktor;

Fig. 3    eine Prinzipskizze nach Fig. 1 mit direkt gekoppeltem Schwingungsaktor;

Fig. 4    eine Prinzipskizze nach Fig. 2 und 3;

Fig. 5     eine Prinzipskizze nach Fig. 1 mit Motorwelle und mehreren Schwingungsaktoren.

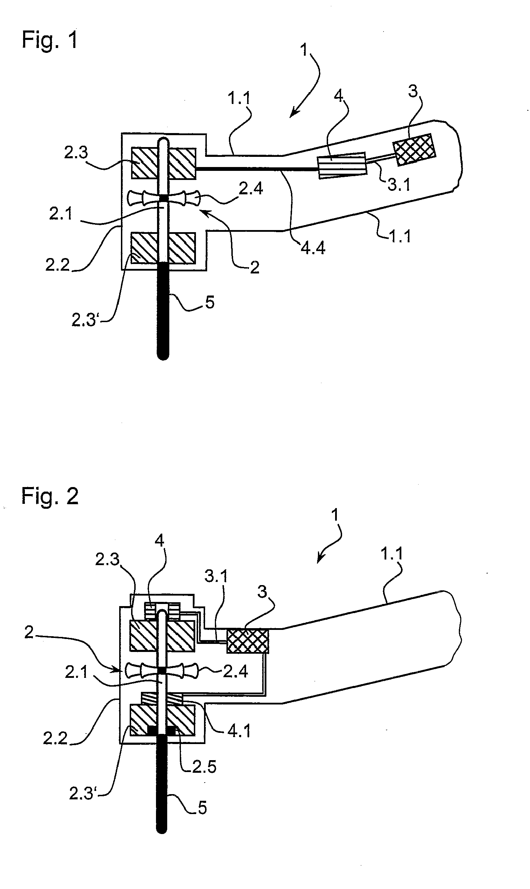

Ein in Fig. 1 dargestelltes Handstück 1 weist ein Gehäuse 1.1 auf, an dem ein Antrieb 2 für ein als Bohrer ausgebildetes Werkzeug 5 angeordnet ist. Der Antrieb 2 weist ein Antriebsgehäuse 2.2 auf, welches sich stirnseitig an das Gehäuse 1.1 anschließt. Innerhalb des Antriebsgehäuses 2.2 ist eine über Lager 2.3, 2.3' gelagerte Antriebswelle 2.1 antreibbar gelagert. Der Antrieb 2 weist zudem eine Turbine 2.4 auf, über welche die Antriebswelle 2.1 in Rotation versetzt wird. Die Lager 2.3, 2.3' sind als Gleitlager ausgebildet.

Zwecks Einkopplung von zusätzlichen Schwingungen in Form von mechanischen Schwingungen und/ oder Körperschall ist der Schwingungsaktor 4 innerhalb des Gehäuses 1.1 im Bereich der Lager 2.3, 2.3' angeordnet. Der Schwingungsaktor 4 ist über ein starres Kopplungsglied 4.4 mit dem oberen Lager 2.3 mechanisch derart gekoppelt, dass die vom Schwingungsaktor 4 generierten Schwingungen über das Kopplungsglied 4.4 auf das Lager 2.3 in radialer Richtung zur Antriebswelle 2.1 übertragen werden. Zwecks Ansteuerung des Schwingungsaktors 4 ist eine Steuereinheit 3 vorgesehen, die mit dem Schwingungsaktor 4 über eine Leitung 3.1 gekoppelt ist. Über die Steuereinheit 3 werden die Frequenz, die Amplitude und/oder die Dauer der einzukoppelnden Schwingung gesteuert.

Die Frequenz der einzukoppelnden Schwingung bemisst sich nach der Lager- bzw. Bohrergeschwindigkeit $V_B$ der Antriebswelle 2.1 relativ zum Lager 2.3, 2.3'. Die sich aus der Frequenz ergebende Schwingungsgeschwindigkeit $V_R$ ist dabei größer als die Lagergeschwindigkeit $V_B$.

Gemäß Fig. 2 ist der Schwingungsaktor 4 mit Bezug zur Antriebswelle 2.1 stirnseitig am oberen Lager 2.3 angeordnet. Durch den so platzierten Schwingungsaktor 4 werden vornehmlich Schwingungen in axialer Richtung zur Antriebswelle 2.1 bzw. zum Bohrer 5 generiert. Hierdurch wird eine Reduzierung der Lagerreibung herbeigeführt. Die Schwingungsgeschwindigkeit muss dabei nicht zwingend größer sein als die Lagergeschwindigkeit, da beide Geschwindigkeitsvektoren rechtwinklig zueinander verlaufen.

Zudem ist ein zweiter Schwingungsaktor 4.1 in axialer Richtung zum unteren Lager 2.3' vorgesehen, der ergänzend oder alternativ betrieben werden kann. Das untere Lager 2.3' weist eine axiale Wellenschulter 2.5 auf, über die der axiale Schwingungseintrag des zweiten Schwingungsaktors 4.1 auf die Antriebswelle 2.1 und somit auf den Bohrer 5 übertragen wird. Neben einer Reduzierung der Lagerreibung aufgrund der Relativbewegung zwischen dem Lager 2.3' und der Antriebswelle 2.1 wird zusätzlich eine Relativbewegung des Bohrers 5 zum Zahn generiert, womit die Bohrleistung erhöht wird. Die Frequenz bzw. Schwingungsgeschwindigkeit ist dabei unabhängig von der Lagergeschwindigkeit der Antriebswelle 2.1. Es kommt lediglich auf die ergänzende Relativbewegung zwischen dem Bohrer 5 und dem Zahn an.

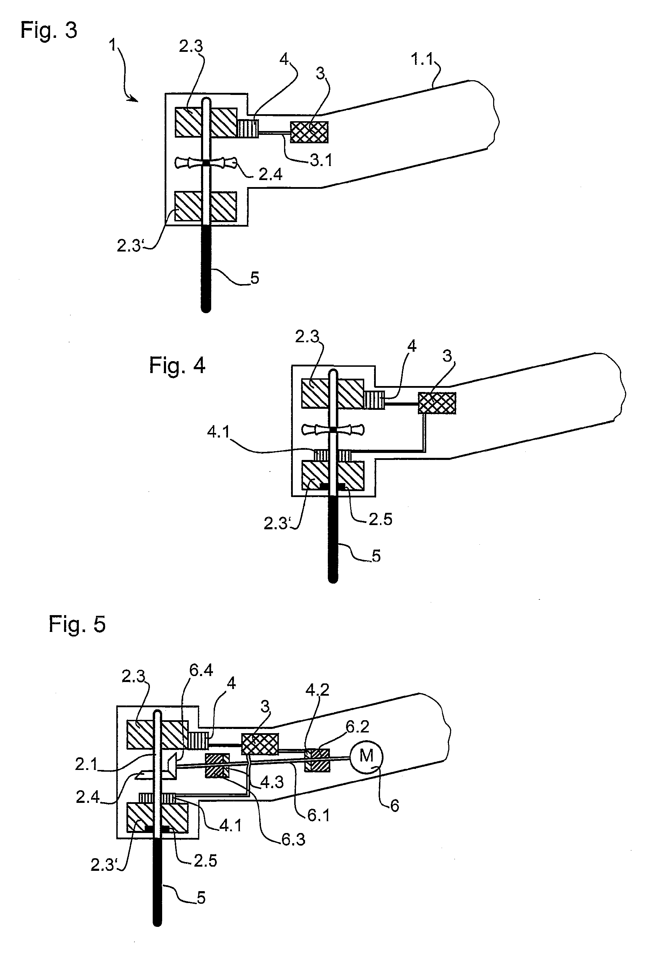

Im Ausführungsbeispiel gemäß Fig. 3 ist der Schwingungsaktor 4 in radialer Richtung zur Antriebswelle 2.1 unmittelbar am oberen Lager 2.3 angeordnet zwecks Generierung eines radialen Schwingungseintrags. Das Kopplungsglied 4.4 ist nicht notwendig.

Grundsätzlich ist es vorgesehen, wahlweise für das obere, das untere oder beide Lager 2.3, 2.3' die verschiedenen Schwingungsaktoren 4 vorzusehen und die axiale sowie die radiale Variante zu kombinieren.

Gemäß Ausführungsbeispiel Fig. 4 sind der Schwingungsaktor 4 in der Anordnung gemäß Fig. 3 und der Schwingungsaktor 4.1 in einer axialen Anordnung gemäß Fig. 2 kombiniert, so dass Schwingungen sowohl in axialer Richtung zur Antriebswelle 2.1 als auch wahlweise in radialer Richtung in das Lager 2. einkoppelbar sind. Der Schwingungsaktor 4.1 ist auf dem unteren Lager 2.3' angeordnet. Beide Schwingungsaktoren 4, 4.1 können dabei mit unterschiedlicher Frequenz betrieben werden, da die Schwingungsgeschwindigkeit $V_R$ des axial angeordneten Schwingungsaktors 4.1 nicht größer sein muss als die Lagergeschwindigkeit $V_B$. Letztgenannte Bedingung muss nur für den radial angeordneten Schwingungsaktor 4 erfüllt sein. Für den axial angeordneten Schwingungsaktor 4.1 ist eine Frequenz zu wählen, die unabhängig von der Lagergeschwindigkeit $V_R$ ist.

Das Ausführungsbeispiel gemäß Fig. 5 weist alternativ zur Turbine 2.4 einen Motor 6 und eine als Getriebeglied ausgebildete, über Motorwellenlager 6.2, 6.3 gelagerte Motorwelle 6.1 auf, die über ein Antriebszahnrad 6.4 mit dem Antriebszahnrad 2.4 der Antriebswelle 2.1 antreibbar gekoppelt ist. Neben dem radialen Schwingungsaktor 4 am oberen Lager 2.3 und dem axialen Schwingungsaktor 4.1 am unteren Lager 2.3' sind zwei weitere Schwingungsaktoren 4.2, 4.3 an dem jeweiligen Motorwellenlager 6.2, 6.3 vorgesehen. Der jeweilige Schwingungsaktor 4.2, 4.3 ist dabei in axialer Richtung zur Motorwelle 6.1 angeordnet. Die Schwingungsgeschwindigkeit $V_R$ der Schwingungsaktoren 4.2, 4.3 muss ebenfalls nicht größer sein als die Lagergeschwindigkeit $V_B$ der Motorwelle 6.1, da die Geschwindigkeitsvektoren rechtwinklig zueinander angeordnet sind.

Bezugszeichen

| 1 | Handstück |
|---|---|
| 1.1 | Gehäuse |
| 2 | Antrieb |
| 2.1 | Antriebswelle |
| 2.2 | Antriebsgehäuse |
| 2.3 | Lager |
| 2.3' | Lager |
| 2.4 | Turbine, Antriebszahnrad |
| 2.5 | Wellenschulter |
| 3 | Steuereinheit |
| 3.1 | Leitung |

| | |
|---|---|
| 4 | Schwingungsaktor |
| 4.1 | Schwingungsaktor |
| 4.2 | Schwingungsaktor |
| 4.3 | Schwingungsaktor |
| 4.4 | Kopplungsglied |
| 5 | Bohrer, Werkzeug |
| 6 | Welle |
| 6.1 | Motorwelle |
| 6.2 | Motorwellenlager |
| 6.3 | Motorwellenlager |
| 6.4 | Antriebszahnrad |
| | |
| a | Schwingungsamplitude |
| $V_B$ | Lager- bzw. Bohrergeschwindigkeit |
| $V_R$ | Schwingungsgeschwindigkeit |

**Patentansprüche**

1.  Antrieb (2) für ein dentales Handstück (1) mit einer Antriebswelle (2.1) und einem die Antriebswelle (2.1) aufnehmenden Antriebsgehäuse (2.2), wobei die Antriebswelle (2.1) über Lager (2.3, 2.3') im Antriebsgehäuse (2.2) gelagert ist, **dadurch gekennzeichnet, dass** ein Schwingungsaktor (4) vorgesehen ist, durch den zumindest die Antriebswelle (2.1) und/oder das Lager (2.3) mit mechanischen Schwingungen beaufschlagbar ist.

2.  Dentales Handstück (1) mit einem Gehäuse (1.1) und mit einem im Gehäuse (1.1) angeordneten Antrieb (2) nach Anspruch 1.

3.  Vorrichtung nach Anspruch 1 oder 2, **dadurch gekennzeichnet, dass** der Schwingungsaktor (4) als Piezoelement ausgebildet ist.

4.  Vorrichtung nach einem der Ansprüche 1 bis 3, **dadurch gekennzeichnet, dass** der Schwingungsaktor (4) ein- oder mehrteilig ausgebildet ist oder mehrere Schwingungsaktoren (4) vorgesehen sind.

5.  Vorrichtung nach einem der Ansprüche 1 bis 4, **dadurch gekennzeichnet, dass** der Schwingungsaktor (4) mit der Antriebswelle (2.1) und/oder mit dem Lager (2.3) mechanisch gekoppelt ist.

6.  Vorrichtung nach einem der vorhergehenden Ansprüche, **dadurch gekennzeichnet, dass** der Schwingungsaktor (4) zumindest teilkreisförmig ausgebildet ist und mit Bezug zur Antriebswelle (2.1) in Umfangsrichtung am Lager (2.3) angeordnet ist.

7.  Vorrichtung nach einem der vorhergehenden Ansprüche, **dadurch gekennzeichnet, dass** der Schwingungsaktor (4) mit Bezug zur Antriebswelle (2.1) in axialer Richtung an die Antriebswelle (2.1) und/oder am Lager (2.3) mechanisch gekoppelt ist.

8.  Vorrichtung nach einem der vorhergehenden Ansprüche, **dadurch gekennzeichnet, dass** eine Wellenschulter (2.5) am Lager (2.3) vorgesehen ist, über die die Schwingung von dem Schwingungsaktor (4) auf die Antriebswelle (2.1) und/oder auf ein Werkzeug (5) übertragbar ist.

9.  Vorrichtung nach einem der vorhergehenden Ansprüche, **dadurch gekennzeichnet, dass** eine Steuereinheit (3) vorgesehen ist, die den Schwingungsaktor (4) mit einem Schwingungssignal ansteuert.

10.  Verfahren zum Beaufschlagen eines eine über Lager (2.3) gelagerte Antriebswelle (2.1) aufweisenden Antriebes (2) für ein dentales Handstück (1) mit einer mechanischen Schwingung, **dadurch gekennzeichnet, dass** die Schwingung mittels eines zusätzlichen Schwingungsaktors (4) generiert wird und auf die Antriebswelle (2.1) und/oder das Lager (2.3) der Antriebswelle (2.1) übertragen wird, wobei der Schwingungsaktors (4) über eine Steuereinheit (3) angesteuert wird.

11.  Verfahren nach Anspruch 9, **dadurch gekennzeichnet, dass** Schwingungen mit einer Frequenz $f_R$ von mindestens

$$f_R = V_B / 2\pi a$$

mittels des Schwingungsaktors (4) generiert und eingekoppelt werden, wobei $V_B$ gleich die Lagergeschwindigkeit des Bohrers (5) und a gleich die Größe der Schwingungsamplitude ist.

12.  Verfahren nach Anspruch 9 oder 10, **dadurch gekennzeichnet, dass** zwecks Steigerung der Bohrleistung die Antriebswelle (2.1) in radialer und/oder axialer Richtung mit Schwingungen beaufschlagt wird.

Fig. 1

Fig. 2

Fig. 3

Fig. 4

Fig. 5

Europäisches Patentamt
European Patent Office
Office européen des brevets

## EUROPÄISCHER RECHERCHENBERICHT

Nummer der Anmeldung

EP 08 16 3128

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 204 592 B1 (HUR BEN [US]) 20. März 2001 (2001-03-20) * Spalte 5, Zeilen 7-54 * * Abbildung 1 * ----- | 1-12 | INV. A61C1/07 |
| X | EP 0 305 357 A (BUERMOOS DENTALWERK [AT]) 1. März 1989 (1989-03-01) * Spalte 2, Zeilen 8-23 * * Abbildungen 1,4 * * Spalte 3, Zeile 49 - Spalte 4, Zeile 1 * ----- | 1,6,8,10 | |
| X | US 4 289 849 A (LUSTIG LEOPOLD P ET AL) 15. September 1981 (1981-09-15) * Anspruch 1 * ----- | 1,10 | |
| X | US 4 219 620 A (CARSE MURRAY D [GB]) 26. August 1980 (1980-08-26) * Spalte 2, Zeile 44 - Spalte 3, Zeile 23 * * Abbildung 2 * ----- | 1,10,11 | |
| | | | **RECHERCHIERTE SACHGEBIETE (IPC)** A61C |

Der vorliegende Recherchenbericht wurde für alle Patentansprüche erstellt

| Recherchenort | Abschlußdatum der Recherche | Prüfer |
|---|---|---|
| Den Haag | 5. Februar 2009 | Fortune, Bruce |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 16 3128

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2009

| Im Recherchenbericht angeführtes Patentdokument | | Datum der Veröffentlichung | Mitglied(er) der Patentfamilie | | Datum der Veröffentlichung |
|---|---|---|---|---|---|
| US 6204592 | B1 | 20-03-2001 | KEINE | | |
| EP 0305357 | A | 01-03-1989 | AT | 388283 B | 26-05-1989 |
| | | | DE | 3868305 D1 | 19-03-1992 |
| | | | JP | 1070037 A | 15-03-1989 |
| | | | JP | 2635707 B2 | 30-07-1997 |
| | | | US | 4940410 A | 10-07-1990 |
| US 4289849 | A | 15-09-1981 | EP | 0037095 A1 | 07-10-1981 |
| US 4219620 | A | 26-08-1980 | AR | 213754 A1 | 15-03-1979 |
| | | | AT | 365915 B | 25-02-1982 |
| | | | AU | 514184 B2 | 29-01-1981 |
| | | | AU | 3397578 A | 13-09-1979 |
| | | | BE | 864792 A1 | 03-07-1978 |
| | | | BR | 7801487 A | 02-01-1979 |
| | | | CA | 1085196 A1 | 09-09-1980 |
| | | | CH | 615094 A5 | 15-01-1980 |
| | | | DE | 2810109 A1 | 14-09-1978 |
| | | | DK | 107078 A | 12-09-1978 |
| | | | ES | 243475 Y | 16-02-1980 |
| | | | FR | 2382883 A1 | 06-10-1978 |
| | | | GB | 1597483 A | 09-09-1981 |
| | | | IE | 46368 B1 | 18-05-1983 |
| | | | IT | 1093341 B | 19-07-1985 |
| | | | JP | 53114295 A | 05-10-1978 |
| | | | NL | 7802724 A | 13-09-1978 |
| | | | NO | 780846 A | 12-09-1978 |
| | | | NZ | 186665 A | 21-02-1980 |
| | | | SE | 427794 B | 09-05-1983 |
| | | | SE | 7802640 A | 12-09-1978 |
| | | | ZA | 7801399 A | 28-03-1979 |

Für nähere Einzelheiten zu diesem Anhang : siehe Amtsblatt des Europäischen Patentamts, Nr.12/82

EP 2 042 121 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19613681 A1